# EUROPEAN PATENT APPLICATION

(11) **EP 2 375 346 A1**
(43) Date of publication of application: **12.10.2011**
(21) Application number: 10305375.7
(22) Date of filing: 12.04.2010
(51) Int. Cl.: G06F 17/30

(54) **Computer system comprising a clustered storage device and method for operating the same**

(71) Applicant: Tixel GmbH, 30625 Hannover (DE)
(72) Inventor: Aust, Andreas, 30177 Hannover (DE); Siemens, Eduard, 31319 Sehnde (DE); Kubsch, Stefan, 31559 Hohnhorst (DE)

(57) **Abstract**

Computer system comprising a clustered storage device (2) and method for operating the same, said method comprising a plurality of storage nodes (41..43) being linked together with an intra-cluster communication level (8), said clustered storage device (2) providing a common file system on a disk space (10) that is spread over the storage nodes (41..43), the method comprising the following steps:
a) accessing at least one file that is stored on the disk space (10) at a first and a second point in time via a first storage node (41..43),
b) reading a first and a second file access time corresponding to the first and second access of said at least one file, via a second storage node (41..43),
c) comparing a first time span that is calculated between a first and second file access time with a second time span that is calculated between the first and the second point in time,
d) indicating that the first and the second storage node (41..43) are pointing to a same physical entity of the disk space (10), in case the difference between the first and the second time span is lower than a predetermined threshold value.

## Description

Computer system comprising a clustered storage device and method for operating the same

Today's companies are facing a tremendous increase in the amount of data used to conduct their everyday business. The increase of data is mainly due to the explosion of unstructured data that is generated e.g. by applications storing video-, audio- or image-files or by applications handling large sets of research data. Large digital files of unstructured data are pushing the bounds of traditional storage systems with respect to capacity and performance. Especially in video and film production environments, high resolution material needs to be stored, processed and transferred via high speed networks. Nowadays, storage area networks (SAN) or network attached storage (NAS) are the straight forward solutions, in order to achieve adequate throughput values.

However, streaming or copying 4k video material in real time can result in data rates around 10 Gbps, depending on frame rate, color depth, etc. Even for high definition video material that has about 2k, the data rate is about 1.6 Gbps. Obviously, the ability to access vast amounts of disk space is crucial for the aforementioned applications.

A further approach going beyond SAN and NAS is clustered storage. In a clustered storage device, a plurality of machines, so called storage nodes, are linked together. Each storage node comprises a plurality of hard disk drives. The sum of all hard disk drives comprised by the storage nodes of the clustered storage device build a disk space that is accessible from each one of the storage nodes comprised by said clustered storage device.

The key principle behind a clustered storage system is the symmetry among all its nodes since each node is a coherent peer to the other. Each node comprises a storage controller, several hard discs, CPU, memory and network connectivity. The tasks, the clustered storage device must perform, are distributed uniformly across its nodes. However, the clustered storage device has only one logical brain, regardless of the number of storage nodes and further, a single file system spans the whole cluster, i.e. the disk space of the clustered storage device is accessible under one single drive letter.

In order to provide intra-cluster communication, the respective storage nodes are connected via a high speed network on an intra-cluster communication layer. Gigabit Ethernet or a high speed bi-directional serial bus system, e.g. Infiniband are commonly used.

A clustered storage device is commonly accessible on a standard Ethernet layer via each storage node; said standard Ethernet layer in turn providing a connection to an application layer on e.g. a linux/unix, mac or windows machine. Further, the clustered storage device is not only accessible via a single mount point, i.e. a single storage node, but also via a plurality of storage nodes providing a plurality of mount points. In order to achieve a maximum throughput, a plurality of mount points is used in parallel to access the disk space. However, each mount point, i.e. each storage node is imported at the client's machine under a different name. Consequently, the client's application has to ensure that all of the imported mount points access the same physical disk space and point to the same directory, respectively. In a clustered storage system having at least two mount points to its disk space, it is necessary to check whether both mount points point to the same physical part of the disk space/the same directory.

In case the storage system is mounted with write permissions, according to known methods, a method for checking whether different mount points point to the same directory comprises: writing a test file via a first mount point and checking whether the identical file appears in the other mount points, subsequently. Now the data content of the test file is checked. In case this content is consistent with the content known from the write operation, it is assumed that both mount points point to the same physical part/directory of the disk space. However, this method is only applicable, if the client's application is given read- and write-authorization. However, this is not favorable in all cases.

Accordingly, it is an object of the present invention to provide a clustered storage device and a method for operating the same, said method allowing a check of proper read operations in said clustered storage system, while an access to the disk space is restricted to read only operations.

The problem is solved by the subject matter of independent claims 1 and 9, advantageous embodiment are subject matter of the dependent claims.

The Method according to the invention is for operating a clustered storage device having the following features. The clustered storage device comprises a plurality of storage nodes being linked together with an intra-cluster communication layer. Said clustered storage device provides a common file system on a disk space that is spread over the storage nodes comprised by the clustered storage device. The method according to the invention comprises the following steps:
a) Accessing at least one file that is stored on the disk space at a first and a second point in time via a first storage node.
b) Reading a first and a second file access time corresponding to the first and second access of said at least one file, via a second storage node.
c) Comparing a first time span that is calculated between a first and second file access time with a second time span that is calculated between the first and the second point in time.
d) Indicating that the first and the second storage node are pointing to a same physical entity of the disk space, in case the difference between the first and the second time span is lower than a predetermined threshold value.

The Method for operating a clustered storage device is based on the following considerations:
The disk space of a clustered storage device is spread over a plurality of different storage nodes. During operation, said disk space is accessed by a plurality of user, i.e. user applications, via different storage nodes. It is even possible to access the disk space via more than one storage node in parallel.

By way of an example only, a scenario wherein such a clustered storage device is used in a multimedia environment and video data, e.g. from a digital camera, is stored in its disk space. Usually a digital camera generates file names like e.g. 001.dpx, 002.dpx, etc. In case a second camera - later on or in parallel - is also recording a video stream and storing its files in the disk space of the clustered storage device, said second camera will also generate files, named in the aforementioned way. Consequently, the disk space comprises more than one file having identical file names. Obviously, it is not sufficient to identify the files via their file name only. The situation remains uncritical as long as the write operation and the read operation are executed via the same storage node. However, the disk space is accessible via a plurality of storage nodes and it is one of the key features of a clustered storage device to provide access via more than one storage node. In order to provide an unambiguous correlation between the content and the file, it is inevitable to ensure that the storage nodes point to the same physical entity of the disk space.

Further, a scenario should be assumed wherein the user accessing the disk space of the clustered storage device has no permission to write onto the disk space, e.g. due to data security reasons. Consequently, a straight forward solution, like writing a test file having a known content to the disk space, reading said test file later on and comparing the known content with the content of the test file that has been read out, is no option.

It has been recognized that the file access time may be used for the desired determination, whether the storage nodes point to the same physical entity/folder of the disk space. The file access time is a suitable parameter for the desired determination, since the access time of a file is altered during a read-operation as well as during a write-operation. Therefore, a read-access is sufficient, no writing authorization is necessary.

While known solutions are based on a comparison of data content comprised by a test file, the method according to the invention aims to specifically alter the file access times of files already present on the disk space. A known pattern of alternations is applied to said files. The questions whether two different storage nodes point to the same physical entity of the disk space is answered by comparing file access times that have been determined via a second storage node with the predetermined pattern of alternations that have been performed via a first storage node.

In a minimal configuration of such a method, it would be sufficient to perform a single access at a certain and known point in time and to read out the file access time of the particular file in question later on, via a different storage node. The absolute and known value of the file access may be compared with the file access time that has been read-out later on.

However, in practice, a plurality of different users accesses the disk space of a clustered storage device very frequently. The abovementioned method provides only little reliability, since the consistence of the access times could be accidentally due to frequent alternations of access times caused by the users.

In order to provide a reliable method, two access operations are performed and consequently two different access times form the pattern mentioned before. It is irrelevant whether a single file or a plurality of different files is accessed at different points in time. However, it is a crucial feature that the alternation of access times and the read out of access times are performed via different storage nodes of the clustered storage device. This demand is obvious since it should be ensured that these two nodes point to the same physical entity/folder of the disk space.

Further, no access times directly but differences between access times are compared. The time span between the first and second access operation performed via a first storage node is known. Later on, the difference between the file access times of the one or more files that had been accessed is determined via a second storage node. In a next step, a difference between the aforementioned time span and the difference between the determined access times is calculated, i.e. a difference of differences. In principle, said difference should be equal to zero. For practical application, the difference should be lower than a predetermined threshold value.

The method for operating a clustered storage device allows to ensure whether different storage nodes of a clustered storage device point to the same physical entity of a disk space. For the first time, the method according to the invention allows the aforementioned determination under the condition that the respective user or application has no write-authorization to the disk space of the clustered storage device. Further, the method according to the invention allows finding of errors that had been made during configuration of the file system. It is a further advantage that the method is applicable in almost any known network system.

Advantageously, the first and the second point in time are chosen randomly. The reliability of the method for operating the clustered storage device is further improved, since the probability of an accidental accordance of the access times, e.g. due access from another user, is further lowered.

It is further advantageous, if the step of accessing comprises the steps of accessing a single file at a first and a second point in time and the step of reading comprises the steps of reading the file access time of said file subsequently to the first and second access, respectively. According to an alternative, the step of accessing comprises the steps of accessing a first and a second file being different from each other at a first and a second point in time and the step of reading comprises the steps of reading the file access times of said first and second file. The simplest version of the method comprises accessing one and the same file. By accessing different files, not only a temporary displacement is used for identification, but also a physical displacement namely on the disk space and by accessing different files further improves the reliability of said method.

The reliability of the method is further improved if the step of accessing comprises accessing at least one file at more than two points in time and the step of reading comprises reading more than two corresponding file access times. By applying more than two points in time and correspondingly reading more than two access times access patterns may be applied that may be characteristic to the respective method. In a similar way the reliability of the method is enhanced, if the step of accessing is executed by using more than one storage node. Preferably, the step of reading is executed using more than one storage node. The highest reliability of the method is achieved by setting the threshold value to zero.

A clustered storage device according to the invention comprises a control entity for executing a method according to one of claims 1 to 8. Same or similar advantages that have been mentioned for the method according to the invention apply to the clustered storage device according to the invention.

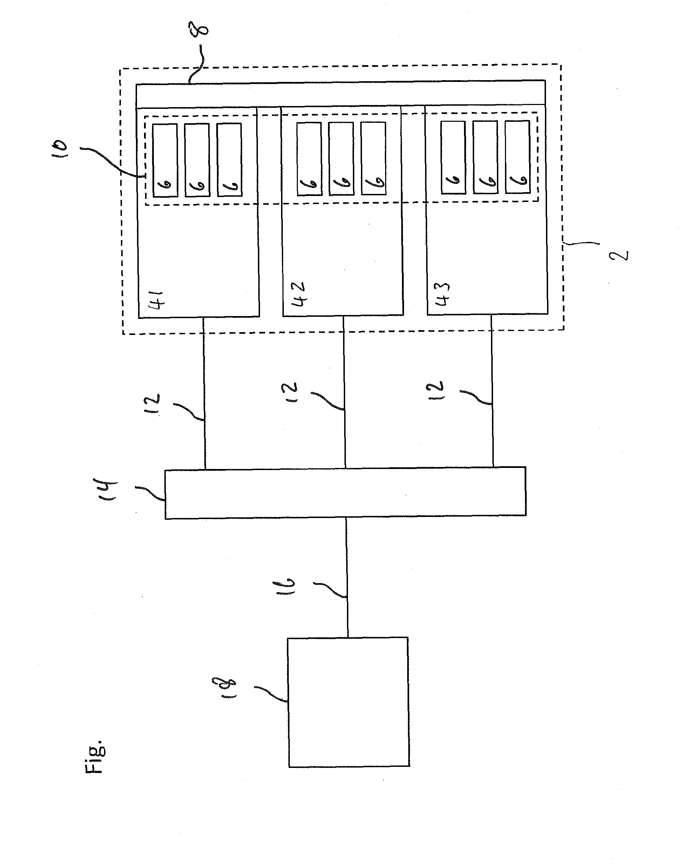

In the following, the invention will be described in more details with reference to the figure showing a schematic view of a system comprising a clustered storage device being connected to a client via a network.

A clustered storage device 2 shown in the figure comprises three storage nodes 41..43, each of them comprising a plurality of hard disk drives 6. The storage nodes 41..43 are connected to each other via a high speed network on an intra cluster communication layer; preferably, an infiniband system is used. The storage nodes 42..43 communicate via the intra cluster communication layer 8 so as to provide a common disk space 10 consisting of the hard disk drives 6 comprised by the storage nodes 41..43.

Each storage node 41..43 exports a mount point via a 1 Gbps Ethernet 12 to a 10Gbps/1Gbps switch 14 that is in turn connected via a 10 Gbps Ethernet 16 to a client 18. Provided that the depicted system is a multimedia system, the client 18 is e.g. a machine for displaying high resolution video material that is stored in the disk space 10 of the clustered storage device 2. The network file system of the clustered storage device is mounted at the client 18 with a read-authorization only, e.g. due to security reasons. Preferably, the clustered storage device is run under a oneFS file system. In order to benefit from the improved throughput of a clustered storage device 2, the disk space 10 is accessed by the client 18 via more than one storage node 41..43, preferably via all of them in parallel.

In practice, the client's machine 18 imports the network file system of each storage node 41..43 as a share under a different name. Now, the client's application has to ensure that all imported file systems are accessed simultaneously in order to achieve a maximum throughput. Remember, the file system is mounted as read-only, due to security reasons.

In order to ensure that the client 18 is accessing the same physical entity of the disk space 10, i.e. the same folder in the common file system of the clustered storage device 2, via all of the storage nodes 41..43, the following method is executed by a control entity comprised by said client 18, according to a first embodiment of the invention.

A small portion, preferably just a single bit, of a set of files that are stored on the disk space of the clustered storage device 2 is read via a first storage node 41..43, e.g. storage node 41, in order to cause the operating system of the clustered storage device 2 to modify the file access time field in the file properties of the respective files. Preferably, the set of files is chosen randomly. However, the respective files should be present inside the folder in question.

For the read operation, not only a set of different files is chosen randomly, but also the access times for the different read operations carried out on said set of files are chosen according to a random pattern, as will be explained in the following:
At a first randomly chosen point in time, a first file is read, as mentioned before it is theoretically sufficient to read just a single bit of said file. After a certain time span that is also chosen randomly and according to the here discussed example set to two seconds, another and second file is read. Again it is sufficient to read just a single bit. Subsequently, after a second randomly chosen time span expired, exemplarily said second time span shall be three seconds, another bit from a third file is read. Remember, the operating system of the clustered storage device 2 recognizes said read operations and alters the field for the file access time accordingly.

Now the access times of said aforementioned files one to three are read out and the results are compared with the known access pattern. While the three read accesses mentioned before have been carried out via a first access node 41..43, referring to the abovementioned example via access node 41, the read out operations of the respective access times is performed via a second and different access node41..43, e.g. access node 42.

In detail, the access times of files one to three are read out via access node 42, the differences between said access times are calculated and compared to the known differences between the points in time when the read operation had been carried out according to the access pattern. In case the access time of file two equals the access time of file one plus two seconds and the access time of file three equals the access time of file one plus five seconds, it is assumed that both mount points point to the same physical entity / folder of the disk space 10.

The time spans between the different read-operations are chosen randomly in order to create the necessary uniqueness of the access pattern. This feature assures the reliability of the method, since two or more users of the clustered storage device 2 possibly run the abovementioned test in parallel.

In the following, a further embodiment will be explained. A scenario where only few files are located in a respective directory of the disk space 10 shall be assumed. The method according to this embodiment differs from the aforementioned embodiment in that only a single file instead of a plurality of files is accessed. Accordingly, an access pattern as follows is applied.

A first file is accessed via a first storage node 41..43, e.g. storage node 43, preferably only a single bit is read. Subsequently the access time of said file is checked via a different storage node 41..43, e.g. storage node 42. After a certain and again randomly chosen time span, e.g. just one second later, said file is accessed again via storage node 43 and the access time is checked via a storage node 42 as well. The procedure is repeated after a further randomly chosen time span, e.g. three seconds later.

Now, the differences between the access times according to the access pattern and the differences between access times that have been determined are compared. In detail, the time span between the first and the second access is one second, accordingly the difference between the first and second access time that has been readout shall also be just one second. The same applies to the second and third file access. In case all the differences are matching or lower than a threshold value, it is assumed that both mount points, i.e. storage node 42 and 43 used for the respective method, point to the same physical entity / folder of the disk space 10.

## Claims

1. Method for operating a clustered storage device (2) comprising a plurality of storage nodes (41..43) being linked together with an intra-cluster communication level (8), said clustered storage device (2) providing a common file system on a disk space (10) that is spread over the storage nodes (41..43), the method comprising the following steps:
a) accessing at least one file that is stored on the disk space (10) at a first and a second point in time via a first storage node (41..43),
b) reading a first and a second file access time corresponding to the first and second access of said at least one file, via a second storage node (41..43),
c) comparing a first time span that is calculated between a first and second file access time with a second time span that is calculated between the first and the second point in time,
d) indicating that the first and the second storage node (41..43) are pointing to a same physical entity of the disk space (10), in case the difference between the first and the second time span is lower than a predetermined threshold value.

2. Method according to claim 1, wherein the first and the second point in time are chosen randomly.

3. Method according to claim 1 or 2, wherein the step of accessing comprises the steps of accessing a single file at a first and a second point in time and the step of reading comprises the steps of reading the file access time of said file subsequently to the first and second access, respectively.

4. Method according to claim 1 or 2, wherein the step of accessing comprises the steps of accessing a first and a second file being different from each other at a first and a second point in time and the step of reading comprises the steps of reading the file access times of said first and second file.

5. Method according to one of claims 1 to 4, wherein the step of accessing comprises accessing at least one file at more than two points in time and the step of reading comprises reading more than two corresponding file access times.

6. Method according to claim 5, wherein the step of accessing is executed by using more than one storage node (41..43) and preferably the step of reading is executed using more than one storage node.

7. Method according to one of claims 1 to 6, wherein the threshold value is set to zero.

8. Method according to one of claims 1 to 6, wherein the file access time is stored in the file access time field in the file properties of the respective file.

9. Computer system comprising a client (18) being connected to a clustered storage device (2), said client (18) having a control entity for executing a method according to one of claims 1 to 8.
